# EUROPÄISCHE PATENTANMELDUNG

(11) **EP 1 101 401 A1**
(43) Veröffentlichungstag der Anmeldung: **23.05.2001**
(21) Anmeldenummer: 00123130.7
(22) Anmeldetag: 25.10.2000
(51) Int. Cl.: A01K 1/00

(54) **Tierstall und Verfahren zu seinem Betrieb**

(30) Priorität: 25.10.1999 DE 19951448
(71) Anmelder: Schönhammer, Johann, 84152 Mengkofen (DE)
(72) Erfinder: Schönhammer, Johann, 84152 Mengkofen (DE)
(74) Vertreter: Riederer Freiherr von Paar zu Schönau, Anton

(57) **Zusammenfassung**

Bei einem Tierstall (1), insbesondere Schweinestall, mit getrennten Grundrißbereichen (2, 3) für einerseits den Ruheaufenthalt der Tiere und andererseits die Mistabgabe der Tiere, mit einer Installation (6, 7, 9, 11; 33 - 39; 51 - 55) zur steuerbaren erzwungenen Stallbelüftung ist zur Beeinflussung des Liegeverhaltens der Tiere durch gezielten Zugluftbetrieb die Luftzufuhr einerseits zum Aufenthaltsbereich (2) und andererseits zum Mistbereich (3) des Stalls unterschiedlich gesteuert, oder ist dem Aufenthaltsbereich (2) eine exklusiv diesen Bereich mit einem Luftzug versehende steuerbare Belüftungsinstallation (6, 12) zugeordnet, während der Mistbereich (3) in einem Stallbereich mit Luftzirkulation (16, 17) liegt. Man erzeugt nun bei warmer Witterung einen Luftzug (12) im wesentlichen nur im Aufenthaltsbereich (2) des Stalls (1) und erzeugt bei kühler Witterung keinen Luftzug in diesem Bereich, sondern im Mistbereich 3.

## Beschreibung

Die Erfindung bezieht sich auf einen Tierstall, insbesondere Schweinestall, mit getrennten Grundrißbereichen für einerseits den Ruheaufenthalt der Tiere und andererseits die Mistabgabe der Tiere, mit Installationen zur steuerbaren erzwungenen Stallbelüftung, und auf ein Verfahren zu seinem Betrieb, nämlich zur Steuerung der erzwungenen Lüftung.

Zur Belüftung von Schweineställen ist es beispielsweise aus der DE-Patentschrift 35 21 700 bekannt, daß ein Teil der Frischluft über an der Stalldecke angeordnete, mit einer Vielzahl von feinen Luftdurchlässen versehene Flächenluftverteiler, sogenannte Luftrieselböden, zugeführt wird und der andere Teil aus verschließbaren Deckenluftverteilern ausströmt, wobei die letzteren in Abhängigkeit von Temperaturbedingungen geöffnet oder geschlossen werden.

Es sind auch Stalldecken bekannt, die als Belüftungsdüsen langgestreckte Spalte aufweisen, die durch querverschiebliche Schieber gleichzeitig geöffnet oder geschlossen werden können.

Bei Ställen, speziell bei Schweineställen ergibt sich häufig das Problem, daß es einerseits einen Aufenthaltsbereich, nämlich eine Liegefläche, und andererseits eine Fläche für die Mistabgabe der Tiere gibt, wobei aber die Tiere selbst diese unterschiedliche Zweckbestimmung nicht konsequent beachten. Beispielsweise gibt es Ställe, bei denen die Liegefläche zur Schaffung eines Kleinklimas mit einer niedrigen deckenartigen Abdeckung versehen und nach außen durch zumeist durchsichtige Vorhangstreifen durchdringlich abgeschirmt ist. Die Tiere sollen zur Mistabgabe diesen Liegebereich verlassen und einen Mistbereich aufsuchen, der beispielsweise mit Hilfe eines maschinell betätigten Schiebers wieder entmistet werden kann. Der Stall kann auch im Mistbereich oder auch im Gesamtbereich einen Spaltenboden aufweisen, durch den der Mist in einen Mistbunker hinunterfällt, gegebenenfalls bei der Reinigung mit Hilfe eines Schlauchs.

Spaltenböden in Ställen sind weitgehend üblich. Gemäß neueren Vorstellungen, beispielsweise gemäß dem "Gustino-Markenfleischprogramm", sollen jedoch wenigstens zwei Drittel des Stalls einen festen, spaltenfreien Boden haben, eventuell mit Streu. Von den Tieren, in diesem Fall Schweinen, wird erwartet, daß sie zur Mistabgabe das Stalldrittel mit dem Spaltenboden aufsuchen.

Es erweist sich jedoch, daß diese Absicht nicht vollständig gelingt und die Schweine immer wieder ihren Kot im Aufenthaltsbereich absetzen.

Es ist aus der DE 32 09 569 A bekannt, daß einerseits dem Aufenthaltsbereich und andererseits dem Mistbereich eines Schweinestalls getrennte, unterschiedlich steuerbare Belüftungssysteme zugeordnet sind. Die auf den Mistbereich, der einen Spaltenboden aufweist, gerichtete Zuluft ist im Winterbetrieb gekühlt. Hierdurch können die Schweine dazu bewegt werden, zum Misten diesen Bereich aufzusuchen, da sie für diesen Zweck zumindest im Winter einen kühlen Ort bevorzugen. Im Sommer ist jedoch bei diesem Teilspaltenboden der angenehmere Aufenthalt im Spaltenbodenbereich, der eine gewisse Luftzirkulation und durch den unterbrochenen Boden eine angenehme Kühlung bietet, so daß die Tiere sich dort lagern und zur Mistabgabe in den Bereich mit festem Boden hinübergehen. Der bauliche Aufwand und die Installationskomplexität sind außerdem erheblich. Vollständig getrennte und entsprechend aufwendige Belüftungssysteme für einerseits den Aufenthalts- und andererseits den Mistbereich sind auch aus der DE 10 41 724 B bekannt.

Demgegenüber soll durch die Erfindung mit vertretbarem Installationsaufwand die das erwünschte Mistverhalten der Tiere auslösende Belüftung so bewirkt werden, daß sie sowohl bei warmer als auch bei kalter Witterung zum Erfolg führt.

Dies wird gemäß der Erfindung dadurch erreicht, daß - ausgehend von einer einzigen Lüftungsinstallation gemäß DE 35 21 700 B - die steuerbare Belüftungsinstallation einerseits für den Aufenthaltsbereich und andererseits für den Mistbereich des Stalls unterschiedlich steuerbar ist: bzw. dadurch, daß die steuerbare Belüftungsinstallation exklusiv dem Aufenthaltsbereich als diesen Bereich mit einem Luftzug versehend zugeordnet ist und der Mistbereich in einem Stallbereich mit natürlicher Luftzirkulation durch einen Spaltenboden, unter dem sich eine Rinne befindet, liegt.

Im Rahmen der Erfindung wird also durch gezielten Zugluftbetrieb mit einem gemeinsamen Lüftungssystem und einer einzigen Zuluftquelle das Liegeverhalten der Tiere beeinflußt. Durch die die Zuluft bzw. Zugluft, die von den Tieren im Winter als für den längeren Aufenthalt unangenehm und im Sommer als für den längeren Aufenthalt angenehm empfunden wird, wird der Stall in einen "gemütlichen" und einen "ungemütlichen" Teil unterteilt, wobei die entsprechenden Maßnahmen im Sommer und im Winter unterschiedlich sind. Im Sommer ist der "gemütliche" Teil derjenige, in dem ein Luftzug herrscht, und im Winter derjenige, in dem kein Luftzug herrscht. Zumindest bei Schweinen ist das Verhalten so, daß sie sich im angenehmeren Teil lagern, jedoch zur Mistabgabe aufstehen und in den anderen Stallbereich hinübergehen. Durch die gezielte, örtlich unterschiedliche Zuglufterzeugung in den verschiedenen Stallbereichen können also die Schweine zu allen Jahreszeiten zum beabsichtigten Verhalten angehalten werden. Die hierfür erforderliche Installation ist kaum komplexer als die einfache gleichmäßige Belüftung.

Dieses Verhalten wurde speziell bei Schweinen erforscht, ist aber auch für andere Tiergattungen denkbar, die sich diesbezüglich vergleichbar verhalten und denen Ställe zugewiesen werden, in denen sie sich frei bewegen können.

Die Steuerung der Belüftung kann manuell, halbautomatisch oder vollautomatisch erfolgen, wobei als Eingabewerte einer automatischen Steuerung die Stall-Innentemperatur, die Außen- und Zulufttemperatur und/oder die Signale von Präsenzsensoren, die die Grundrißbereiche überwachen, in Frage kommen. Für die Konstruktion der Belüftungsdüsen stehen dem Fachmann vielfältige Möglichkeiten zur Verfügung, insbesondere derart, daß die Stalldecke als Luftrieselboden in Form einer Lochplatte mit darüber angeordneter Zuluft-Zwischenkammer ausgebildet ist und in der Lochplatte zusätzlich größere Öffnungen gebildet sind, die durch Klappen oder Schieber gesteuert verschließbar sind, und daß die größeren Öffnungen die getrennten Grundrißbereiche getrennt belüftende Luftdüsen sind.

Weitere Einzelheiten, Vorteile und Weiterbildungen der Erfindung ergeben sich aus der folgenden Beschreibung bevorzugter Ausführungsbeispiele unter Bezugnahme auf die Zeichnung. Es zeigen:
- Fig. 1: schematisch und teilperspektivisch einen Querschnitt durch einen Tierstall gemäß einer ersten Ausführungsform der Erfindung;
- Fig.n 2 und 3: Ansichten entsprechend Fig. 1 durch eine zweite bzw. eine dritte Ausführungsform der Erfindung;
- Fig. 4: einen mehr ins einzelne gehenden Querschnitt durch einen erfindungsgemäß aufgebauten Schweinestall;
- Fig. 5: in der Draufsicht und in einem Querschnitt eine beispielsweise Deckenkonstruktion zur Verwendung im erfindungsgemäßen Stall.

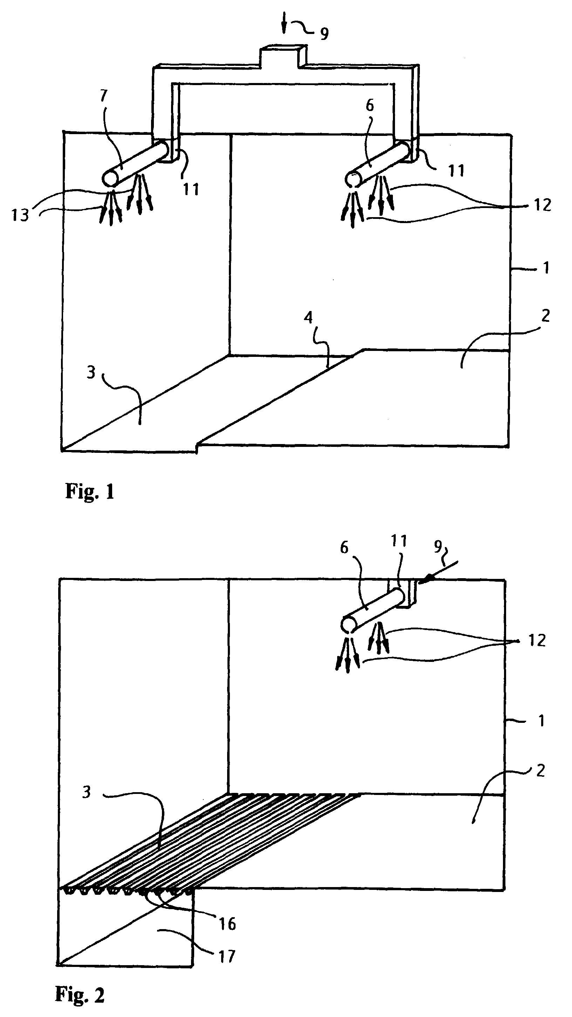

Ein Schweinestall 1 gemäß Fig. 1 ist hinsichtlich seiner Grundfläche eingeteilt in einen Aufenthaltsbereich 2, in dem die Schweine sich lagern sollen, und einen Mistbereich 3, in dem die Schweine ihre Exkremente abgeben sollen. Die Bereiche sind durch eine nach Fig. 1 als Kante ausgebildete Grenzlinie 4 gegeneinander abgegrenzt. An der Stalldecke über den Bereichen 2 und 3 sind als Luftrohre mit Ausblasdüsen dargestellte Belüftungseinrichtungen eingezeichnet, nämlich über dem Aufenthaltsbereich 2 eine Belüftungsleitung 6 - es könnten auch mehrere sein -und über dem Mistbereich 3 eine Belüftungsleitung 7 - auch hier könnten es mehrere sein. Die Belüftungsleitungen 6 und 7 sind an einen schematisch als Pfeil dargestellten Verdichter 9 angeschlossen, und die Luftabgabe der Belüftungsleitungen 6 und 7 wird jeweils getrennt durch ein Steuerventil 11 gesteuert. Die Verdichterleistung reicht für einen Luftzug 12, der im Bereich 2 bis zum Boden reicht, und für einen Luftzug 13, der im Bereich 3 bis zum Boden reicht. Die eingeblasene Luft ist Frischluft von draußen, gegebenenfalls beispielsweise in einem Wärmetauscher vorgewärmt.

Im Winter ist die zugeführte Frischluft kühler als die Luft im Stall. Die Schweine lagern sich außerhalb des Bereichs dieses Luftzugs. Um zu verhindern, daß die Schweine sich im Mistbereich 3 lagern und im Aufenthaltsbereich 2 ihren Mist ablassen, wird der Luftzug 13 verstärkt und der Luftzug 12 abgeschwächt oder ganz gesperrt. Die Folge ist, daß die Schweine sich wie beabsichtigt im Aufenthaltsbereich 2 lagern und im Mistbereich 3 den Mist ablassen.

Im Sommer sind die Verhältnisse umgekehrt, hier ist den Schweinen ein kühlender Luftzug angenehm. Deshalb wird an heißen Tagen der Luftzug 12 stark eingestellt und der Luftzug 13 zurückgenommen. Wiederum ist die Folge, daß die Schweine sich im Aufenthaltsbereich 2 lagern und im Mistbereich 3 den Kot ablassen.

Fig. 2 zeigt in vergleichbarer Darstellung einen Stall, bei dem der Aufenthaltsbereich 2 fester Boden, eventuell belegt mit Streu, ist und der Mistbereich 3 einen Spaltenboden 16 aufweist, unter dem sich eine Mistrinne 17 befindet. Die Belüftungsinstallation könnte hierbei wie gemäß Fig. 1 sein, es ist jedoch eine vereinfachte Ausführung dargestellt, bei der sich nur über dem Aufenthaltsbereich 2 die Belüftungsleitung 6 befindet. Am Spaltenboden 16 ergibt sich eine gewisse natürliche Luftzirkulation durch die Bodenspalten. Insbesondere dann, wenn darauf Tiere lagern, die als Wärmequelle wirken und ein Aufsteigen der Luft verursachen. Es wird nun der die Zugluft im Aufenthaltsbereich 2 bewirkende Luftzug 12 so gesteuert, daß er bei kühler Witterung schwächer ist als die Zirkulation im Bereich 3, und insbesondere abgeschaltet ist. Bei warmer Witterung wird der Luftzug 12 jedoch so gesteuert, daß er stärker ist als die natürliche Zirkulation, beispielsweise maximal

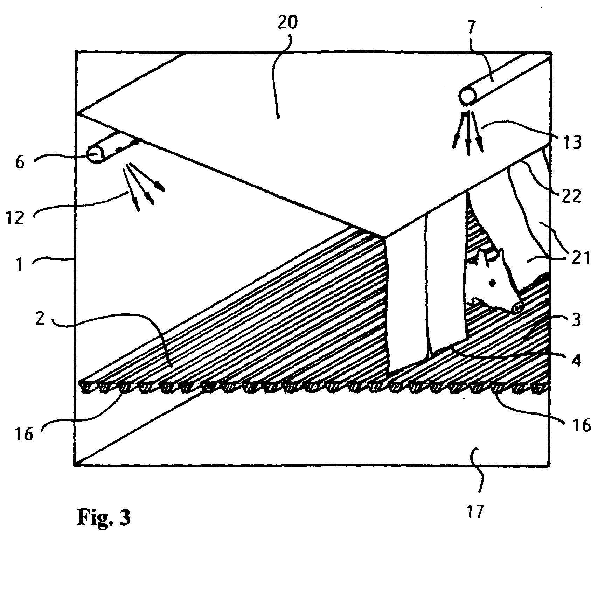

Fig. 3 zeigt in vergleichbar schematischer Darstellung einen Stall, bei dem der Aufenthaltsbereich 2 sich dadurch vom Mistbereich 3 unterscheidet, daß er durch ein Zwischendach 20 und einen Vorhang aus transparenten schweren Kunststoffstreifen 21, die an der Vorderkante 22 des Zwischendachs 20 befestigt sind, vom übrigen Stallvolumen in gewissem Umfang abgetrennt ist. Die Grenzlinie 4 ist also durch die Bodenlinie des Vorhangs aus den Streifen 21 gegeben. Innerhalb des abgetrennten Teils, den der Aufenthaltsbereich 2 darstellt, ist es, wenn keine zusatzlichen Maßnahmen ergriffen werden, wärmer als außerhalb. Dies ist im Winter erwünscht, und die Schweine verlassen nur zum Mistablassen diesen Aufenthaltsbereich 2 und gehen hinaus in den Mistbereich 3, aus dem sie anschließend zurückkehren. Im Sommer ist es den Schweinen im Aufenthaltsbereich 2, wenn keine zusätzlichen Maßnahmen ergriffen werden, zu warm und sie neigen dazu, sich draußen im Mistbereich 3 niederzulegen. Dies kann verhindert werden durch einen kühlenden Luftzug aus der Belüftungsleitung 6. Die über dem Mistbereich 3 angeordnete Belüftungsleitung 7 verbessert weiterhin die Einflußmöglichkeit durch zusätzliche Erzeugung des Luftzugs 13, insbesondere in solchen Situationen, in denen die Temperaturverhältnisse für sich noch keine eindeutige Bevorzugung des Bereichs 2 gegenüber dem Bereich 3 als Liegebereich ergeben.

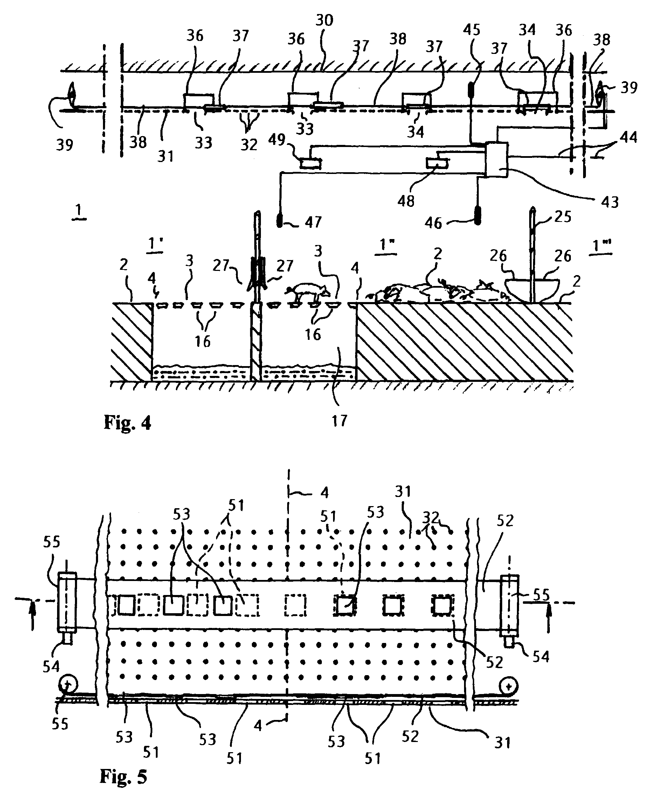

Fig. 4 zeigt die Situation von Fig. 1 mit getrennten Belüftungen für die Bereiche 2 und 3, jedoch mit Spaltenboden 3, mehr ins einzelne gehend. Ein großer Stall 1 ist in mehrere Abteilungen 1', 1'', 1''' unterteilt, und zwar durch Barrieren 25. An den Barrieren 25 liegen jeweils beiderseits entweder Aufenthaltsbereiche 2 oder Mistbereiche 3 an. An der Barriere 25 zwischen zwei Aufenthaltsbereichen 2 befinden sich beiderseits Futtertröge 26, an der Barriere zwischen zwei Mistbereichen 3 befinden sich Trinknippel 27. Die Aufenthaltsbereiche 2 sind jeweils Festbodenbereiche, und die Mistbereiche 3 sind Spaltenböden 16 mit darunter befindlicher Mistrinne 17, in der sich Gülle ansammelt. In einer Abteilung befinden sich beispielsweise 12 bis 25 Schweine, von denen sich zu einer Zeit beispielsweise 1 bis 3 Schweine zum vorgesehenen Zweck im Mistbereich 3 aufhalten. Die Anordnung der Trinknippel 27 im Mistbereich 3 ist, insbesondere wenn es sich um in gewissem Umfang überlaufende oder ein Herumspritzen auslösende Trinknippel handelt, speziell vorteilhaft, da auch ein nasser Boden geeignet ist, einen Kot-Reflex des Schweins auszulösen.

Der Stall 1 hat eine feste Stalldecke 30 und darunter als abgehängte Decke einen Luftrieselboden 31, der eine Vielzahl relativ feiner Luftlöcher 32, beispielsweise von 1 cm Durchmesser, aufweist, beispielsweise nach der aus dem deutschen Gebrauchsmuster 70 14 289 bekannten oder der als "Schönhammer Isoporen-Lochplatten" im Handel befindlichen Bauart. Dazwischen befinden sich breitere Spalte 33 bzw. 34, von denen die Spalte 33 jeweils über einem der Mistbereiche 3 und die Spalte 34 parallel über den im Vergleich zum Bereich 3 breiteren Aufenthaltsbereichen 2 verlaufen, und zwar jeweils parallel zu den Barrieren 25 und zu den Grenzlinien 4 zwischen den Bereichen 2 und 3. Die Spalte 33 und 34 erstrecken sich über die gesamte Breite der darunter liegenden Bereiche und haben eine Breite von beispielsweise 3 bis 4 cm, und zum Zweck des mechanischen Halts der beiderseits der Spalte liegenden Teile der Lochplatten des Luftrieselbodens 31 werden diese durch Bügel 36 örtlich überbrückt. Jeder Spalt 33 bzw. 34 ist durch eine Schieberplatte 37, die parallel entlang dem jeweiligen Spalt liegt, überdeckbar und damit sperrbar oder, umgekehrt, zu öffnen. Die Schieberplatten 37 hängen an Seilzügen 38 und diese hängen an beiderseitigen Steuerhebeln 39, die je Seite auf einer gemeinsamen Achse sitzen, die jeweils mit einem Stellmotor verbunden ist. Die Dimensionierung ist so, daß dann, wenn - wie in Fig. 4 - die Spalte 33 offen sind, die Spalte 34 von ihren Schieberplatten 37 bedeckt sind, und dann, wenn die Spalte 34 offen sind, die Spalte 33 bedeckt und damit gesperrt sind.

Der Luftrieselboden 31 ist immer aktiv, und zwar so, daß durch die Luftlöcher 32 entsprechend den Druckbedingungen etwa zwei Drittel des Luftdurchsatzes für die Frischluft in den Stall 1 gelangen. Das restliche Drittel strömt entweder durch die Spalte 33 oder durch die Spalte 34, gegebenenfalls auch in gewählter Aufteilung durch beide, als kräftiger Luftzug in den Stall. Während die Düsenstrahlen durch die Luftlöcher 32 einen Luftzug erzeugen, der nicht mehr als einen Meter unter der Decke spürbar ist, ist der Luftzug durch die Spalte 33 oder 34 bis zum Boden im jeweiligen Bereich spürbar.

Die (nicht dargestellten) Stellmotoren für die Achsen der Steuerhebel 39 werden von einem Steuergerät 43 gesteuert, das die Steuerung in Abhängigkeit von verschiedenen Eingangsgrößen vornimmt. Diese Eingangsgrößen sind beim dargestellten Beispiel in Signalform die Außentemperatur über eine Signalleitung 44, die Lufttemperatur von einem Temperaturmesser 45 in der Zuluft-Zwischenkammer über dem Luftrieselboden 31, die Lufttemperatur von einem Temperaturmesser 46 im Aufenthaltsbereich 2, die Lufttemperatur von einem Temperaturmesser 47 im Mistbereich 3, sowie Signale von Präsenzsensoren 48 und 49, die die Zahl der Tiere im Aufenthaltsbereich 2 bzw. im Mistbereich 3 erfassen und dadurch die Häufigkeit des Aufenthalts der Tiere in diesen Bereichen als Verarbeitungsdatum zur Verfügung stellen. Mit Hilfe eines entsprechend ausgearbeiteten Datenverarbeitungsprogramms erfolgt dann die Steuerung der Öffnung oder Schließung der Spalte 33 und 34 automatisch.

Fig. 5 zeigt, ebenfalls an einem Luftrieselboden 31, eine abgewandelte Form der Steuerung des Luftzugs in den Bereichen 2 und 3. Hierzu weist der Luftrieselboden 31 in Reihen, die die Grenzlinie 4 im rechten Winkel kreuzen, größere Öffnungen 51 auf, die in mehrere parallelen Reihen angeordnet sind und beim dargestellten Ausführungsbeispiel quadratisch, bei alternativen Ausführungen auch beispielsweise kreisrund oder elliptisch sind. Über jede der Reihen von Öffnungen 51 verläuft ein Folienstreifen 52, der den Öffnungen 51 vergleichbare Ausschnitte 53 in gleicher Teilung aufweist, jedoch mit einem Versatz von einem halben Abstand der Öffnungen 51 zwischen den Bereichen 2 und 3. An den beiden Enden bzw. Rändern befinden sich von Stellmotoren 54 angetriebene Winkelrollen 55, die den Folienstreifen gesteuert in die eine oder in die andere Richtung ziehen und dadurch die Öffnungen 51 ganz freigeben, halb verdecken oder ganz sperren. Diese Ausführung hat den Vorteil einer relativ einfachen, leichten und billigen Konstruktion.

## Patentansprüche

1. Tierstall (1) mit getrennten Grundrißbereichen (2, 3) für einerseits den Ruheaufenthalt der Tiere und andererseits die Mistabgabe der Tiere, mit einer Installation (6, 7, 9, 11; 33 - 39; 51 - 55) zur steuerbaren erzwungenen Stallbelüftung, dadurch gekennzeichnet, daß die steuerbare Belüftungsinstallation (6, 7, 11) einerseits für den Aufenthaltsbereich (2) und andererseits für den Mistbereich (3) des Stalls unterschiedlich steuerbar ist.

2. Tierstall (1) mit getrennten Grundrißbereichen (2, 3) für einerseits den Ruheaufenthalt der Tiere und andererseits die Mistabgabe der Tiere, mit einer Installation (6, 7, 9, 11; 33 - 39; 51 - 55) zur steuerbaren erzwungenen Stallbelüftung, dadurch gekennzeichnet, daß die steuerbare Belüftungsinstallation (6, 12) exklusiv dem Aufenthaltsbereich (2) als diesen Bereich mit einem Luftzug versehend zugeordnet ist und der Mistbereich (3) in einem Stallbereich mit natürlicher Luftzirkulation durch einen Spaltenboden (16), unter dem sich eine Rinne (17) befindet, liegt.

3. Tierstall nach Anspruch 1, dadurch gekennzeichnet, daß die Belüftungsinstallation für die verschiedenen Bereiche (2, 3) eine gekoppelte gegensinnige Steuerung (38, 39; 51, 52, 53) aufweist.

4. Tierstall nach einem der Ansprüche 1 bis 3, dadurch gekennzeichnet, daß die Steuerung (43) der Stallbelüftung als kritische Eingabewerte wenigstens ein von wenigstens einem Temperaturfühler (45, 46, 47) kommendes Temperatursignal, das die Stall-Innentemperatur angibt, und ein von einem weiteren Temperaturfühler (44) kommendes Temperatursignal, das die Außentemperatur angibt, hat.

5. Tierstall nach einem der Ansprüche 1 bis 4, dadurch gekennzeichnet, daß die Steuerung (43) der Stallbelüftung als kritische Eingabewerte von Präsenzsensoren (48, 49), die die getrennten Grundrißbereiche (2, 3) überwachen, kommende Präsenzsignale, die die jeweilige Bereichsbelegung mit Tieren anzeigen, hat.

6. Tierstall nach einem der Ansprüche 1 bis 5, dadurch gekennzeichnet, daß die getrennten Grundrißbereiche (2, 3) einerseits ein Festbodenbereich und andererseits ein Spaltenbodenbereich (16) sind (Fig.n 2, 4).

7. Tierstall nach einem der Ansprüche 1 bis 6, dadurch gekennzeichnet, daß die getrennten Grundrißbereiche (2, 3) einerseits ein offener Bereich und andererseits ein oben niedrig überdachter Bereich sind (Fig. 3).

8. Tierstall nach einem der Ansprüche 1 bis 7, dadurch gekennzeichnet, daß die Stalldecke als Luftrieselboden (31) in Form einer Lochplatte mit darüber angeordneter Zuluft-Zwischenkammer ausgebildet ist und in der Lochplatte zusätzlich wenigstens eine größere Öffnung (34, 51) gebildet ist, die durch Klappen oder Schieber (37, 52) gesteuert verschließbar ist.

9. Tierstall nach dem auf Anspruch 1 rückbezogenen Anspruch 8, dadurch gekennzeichnet, daß die größeren Öffnungen (33, 34; 51) die getrennten Grundrißbereiche (2, 3) getrennt belüftende Luftdüsen sind.

10. Verfahren zum Betrieb des Tierstalls nach einem der Ansprüche 1 bis 9, dadurch gekennzeichnet, daß man bei warmer Witterung einen Luftzug (12) im wesentlichen nur im Aufenthaltsbereich (2) des Stalls (1) erzeugt und bei kühler Witterung in diesem Bereich keinen Luftzug erzeugt.

11. Verfahren nach Anspruch 10, dadurch gekennzeichnet, daß man bei kühler Witterung einen Luftzug (13) im wesentlichen nur im Mistbereich (3) des Stalls (1) erzeugt.
